# EUROPEAN PATENT APPLICATION

(11) **EP 0 969 430 A1**
(43) Date of publication of application: **05.01.2000**
(21) Application number: 99202072.7
(22) Date of filing: 26.06.1999
(51) Int. Cl.: G07F 19/00, G06F 17/60

(54) **Fair witness for electronic transactions**

(30) Priority: 30.06.1998 US 107692
(71) Applicant: SUN MICROSYSTEMS, INC., Palo Alto, California 94303 (US)
(72) Inventor: Lipkin, Efrem, Berkeley, CA 94703 (US)
(74) Representative: Hanna, Peter William Derek

(57) **Abstract**

A fair witness (100) is provided to witness and record all or selected details of an electronic transaction. A transaction may involve multiple parties (120, 140) communicating via the Internet or other distributed communication channels. When one party (120) commences a transaction, the parties connect to the fair witness via trusted communication links (110, 130). One or more parties then pass all or selected details concerning the transaction. The details to be submitted to the fair witness are identified in accordance with a protocol under which the transaction is carried out. The fair witness reliably stores (106) the details for later use in resolving a dispute concerning the transaction. The fair witness may store entire communications (e.g., web pages), selected portions of communications, or message digests. Alternatively, the fair witness is located in the communication path between the parties and is thus able to automatically retrieve information and details to be recorded.

## Description

### Background

The present invention relates to the field of computer systems and electronic commerce. More particularly, a system and method are provided for preventing a party to an electronic transaction from repudiating the terms of the transaction.

The expansion of computer interconnections has provided a new, electronic conduit for business and other official transactions. Electronic transactions are often conducted, however, between two parties who do not know each other and who therefore have no basis for trusting each other. Thus, electronic transactions involve security and legal concerns somewhat different than those encountered in transactions conducted via more traditional means, such as person to person, by telephone, or through a human agent.

One concern common to most transactions or deals, whether conducted electronically or otherwise, involves proving the terms of a transaction. Although the parties to a transaction may believe that they have agreed to identical terms, disputes concerning the agreed-upon terms still occur with unsettling frequency. Such disputes typically do not arise until one party has performed its part, or what it believes to be its part, of the deal.

When a dispute arises between parties concerning a term or terms of a deal, each of the parties generally attempts to prove that its understanding or belief reflects the true nature of the deal. In the paper-based world, one or both parties will usually have some documentation concerning the deal. Hopefully, such documentation will reflect the true nature of the disputed term or terms and evidence both parties' assent (e.g., signatures). Although a legal dispute may still result even when documentation exists, without documentation a legal dispute is almost a certainty (assuming the value involved in the deal is non-trivial).

In the world of electronic transactions, however, deals are conducted via electronic signals and transmissions. Although one party may record communications regarding an electronic transaction (on paper or other media), without some way to unmistakably connect the other party with the communication, the other party may deny its involvement or repudiate a key portion of the transaction. One party's retention of electronic communications concerning a transaction is thus generally insufficient, by itself, to bind the other party to terms reflected in the communications. Without a trusted party to attest to the contents of a communication or transaction and to prove (or at least provide strong evidence) of the contents, the parties' dispute is not easily settled.

For example, archive services exist on the Internet for the purpose of recording digital information, but provide little in the way of proving or reproducing a transaction in order to prevent its repudiation. For example, the archive service known by the Uniform Resource Locator (URL) htt://www.archive.org records various pieces of digital data from the Internet (e.g., web pages) for the purpose of collecting or documenting the history or evolution of the Internet. This service does nothing to record details of a particular electronic transaction of behalf of transaction participants, in a trusted manner or otherwise, and therefore cannot recreate the electronic transaction to prevent a participant from reneging.

As another example, in an electronic auction system a broker negotiates the sale of an item with (i.e., takes bids from) one or more parties. The broker works on behalf of a seller, and the seller and buyer do not negotiate or otherwise directly communicate. Thus, the auction transaction is conducted between two parties - the buyer and the broker - with the broker acting more as an agent of the seller than as a trusted or disinterested third party. Details or terms of the transaction may or may not be preserved and may or may not permit reproduction of the transaction. If details are recorded, they are recorded by one of the two parties. Because the broker is essentially acting as the seller's agent, the buyer has no reason to trust the broker's recollection or recording of a transaction.

U.S. Patent No. 5,629,980 describes a system for controlling the distribution and use of digital works. This system involves repositories of digital works wherein one repository's digital works may be accessed (e.g., copied or loaned) by another. In one embodiment of the system, when such a transaction is consummated both repositories transmit billing information to a credit server in order to prevent circumvention of the billing process. Thus, in this system only billing information is provided to a third party and the purpose is not to reproduce transaction details, but to ensure correct billing. Other details of the transaction, if saved at all, must be recorded by one repository or the other. In addition, there is no provision for reproducing any details of the transaction.

Digital cash systems, such as that which is provided by DigiCash, Inc. are also incapable of reproducing a transaction in the event of a dispute between parties. In addition, a digital bank is not intended to witness or monitor a transaction. A digital bank may retain a record of having provided digital cash to a consumer and/or of having received digital cash from a merchant. The bank generally cannot, however, identify the parties to a particular transaction. As with conventional cash, although the bank may receive the same cash from a merchant that it previously provided to a consumer, the bank cannot, from the information it possesses, identify the consumer and merchant participating in a particular transaction.

Attempting to prevent disputes over electronic transactions by simply storing all communications concerning a transaction is also not a feasible solution for many denizens of the electronic world. In particular, users and applications employing "thin client" technology typically do not have the resources (e.g., storage capability) and/or software to store such communications.

In the environment of Secure Electronic Transactions (SET), for example, order information (OI) concerning a transaction between a consumer and a merchant is provided to a payment acquirer (e.g., a credit card service). In order for the consumer to provide this information, rigorous computational ability is required. Illustratively, an "order description" that contains details of the transaction is converted into a hashed order description (HOD) which is included in the OI provided to the payment acquirer. Also, extensive cryptographic security is generally required in SET, further increasing the demands upon the consumer. Thus, a thin client cannot participate in this form of SET because it lacks the necessary computing resources. In addition, the payment acquirer is not a "trusted" party in terms of being trusted by the consumer to accurately record and/or reproduce details of the transaction.

### Summary

According to the present invention, a system and methods are provided for preventing the repudiation of electronic transactions. In particular, a method is provided for preventing the repudiation of an electronic transaction wherein one or all parties are not required to maintain historical data concerning the transaction. In addition, a method and system for preventing the repudiation of an electronic transaction in a specific embodiment of the invention does not require significant resources or processing capability by the parties involved.

In one embodiment of the invention, a "fair witness" is provided as a trusted witness to an electronic transaction (e.g., conducted via the Internet or other wide area network). In accordance with this embodiment, the fair witness establishes a trusted communication link with two or more parties involved in the transaction. Illustratively, the Secure Sockets Layer (SSL) protocol is used to authenticate a party and create the trusted link to the party.

In a present embodiment of the invention, when the fair witness (e.g., an Internet service) is to begin its role as a witness, a first party (e.g., a merchant connected to the Internet) passes the fair witness a transaction identifier. This transaction identifier is used to identify the transaction and the parties involved in the transaction. As other parties to the same transaction (e.g., a user connected to the Internet through a client) connect to the fair witness (illustratively also using trusted links), they provide the same transaction identifier. The fair witness is thus able to identify all transaction parties.

Once all the parties are connected to the fair witness, one or more details of the transaction are passed to the fair witness by one or more of the parties. The details are indexed and recorded by the fair witness.

In one embodiment, the fair witness receives and records entire communications (e.g., web pages, http requests). In another embodiment, a party passes the fair witness a digest of a communication containing one or more details of the transaction. The digest is illustratively a message digest, which serves to "fingerprint" the transaction. Alternatively, the digest is a summary or extract of the communication.

When a particular protocol is used to conduct the transaction, the fair witness or one of the parties may automatically retrieve relevant details of the transaction according to the protocol.

### Brief Description of the Figures

FIG. 1 is a block diagram of an electronic transaction between two parties, in which a fair witness prevents repudiation of the transaction in accordance with an embodiment of the present invention.
FIG. 2 is a block diagram of an electronic transaction between two parties, in which a fair witness prevents repudiation of the transaction in accordance with an alternative embodiment of the present invention.
FIG. 3 is a block diagram in which a fair witness is called upon to witness an electronic transaction in accordance with an embodiment of the present invention.
FIG. 4 is a flow chart illustrating some of the operations involved in implementing the embodiment of the present invention depicted in FIG. 4.
FIG. 5 is a block diagram of an electronic transaction involving more than two parties that is observed by a fair witness in accordance with an embodiment of the present invention.

### Detailed Description

The following description is presented to enable any person skilled in the art to make and use the invention, and is provided in the context of a particular application and its requirements. Various modifications to the disclosed embodiments will be readily apparent to those skilled in the art, and the general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

For example, one embodiment of the present invention is described in the context of a "fair witness" for preventing the repudiation of an electronic transaction conducted over the Internet, such as one in which one party purchases goods or services from another party. However, the scope of the invention is not limited to a particular type of electronic transaction or method of conducting an electronic transaction. Additionally, in describing this embodiment various communication links are depicted. Although embodiments of the invention are described in the context of Internet communications and methods of accessing the Internet, the scope of the present invention is not limited to a particular type of network or communication links.

Throughout this detailed description, numerous specific details are set forth, such as particular security protocols or authentication techniques, in order to provide a thorough understanding of the present invention. To one skilled in the art, however, it will be understood that the present invention may be practiced without such specific details. In other instances, well-known control structures and system components have not been shown in detail in order to avoid obscuring the present invention.

It should also be understood that the techniques of the present invention may be implemented using a variety of technologies. For example, the fair witness described further herein may be implemented in software running on a computer system, or implemented in hardware utilizing either a combination of microprocessors or other specially designed application specific integrated circuits, programmable logic devices, or various combinations thereof. In particular, the fair witness described herein may be implemented by a series of computer-executable instructions residing on a storage medium such as a carrier wave or a disk drive.

### Description of a Fair Witness

In one embodiment of the invention, a "fair witness" is provided to witness an electronic transaction and prevent a party involved in the transaction from repudiating the transaction or an essential portion thereof. In a typical electronic transaction or deal, two or more parties exchange electronic communications to negotiate the terms of, and to execute, their agreement. Subsequent to the agreement, the parties perform their respective roles. For example, in a sale of an article or service conducted via the Internet, a seller will offer the article or service for a certain price or a buyer will offer to purchase it for a certain price. The other party then responds, possibly accepting the offer or presenting a counter-offer. After the parties have agreed upon the relevant terms (e.g., price, quantity, description, means of delivery, method of payment), the seller delivers the article or provides the service, and the buyer tenders payment.

The present invention provides a system and method for preventing a party to an electronic transaction from repudiating the deal or an important part of the deal after it is executed. A fair witness, not a party to the transaction, records, summarizes, or otherwise preserves all or a portion of the communication or communications that comprise the terms of the parties' agreement. The fair witness is preferably operated by an entity (e.g., a bank or value acquirer) trusted by all parties to the transaction to provide a secure environment for storing, retrieving and/or reproducing details of the transaction.

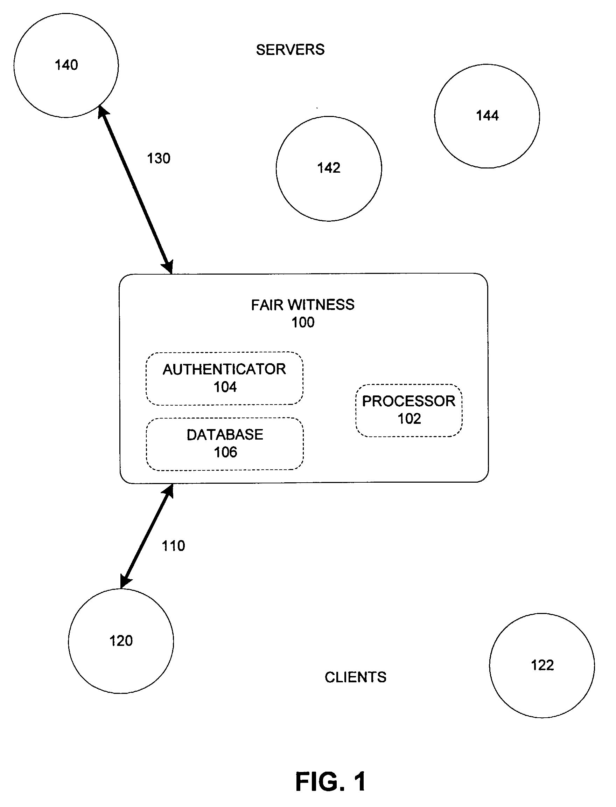

FIG. 1 depicts one embodiment of the present invention. In this embodiment, fair witness 100 is located in the path of communications passing between the client(s) and server(s) involved in an electronic transaction. The transaction featured in FIG. 1 illustratively involves client 120 and server 140, which are coupled to fair witness 100 by communication links 110 and 130, respectively. Although the illustrated embodiment comprises only two parties, in alternative embodiments more than two parties are involved.

Fair witness 100 illustratively comprises processor 102, authenticator 104 and database 106. In addition, fair witness 100 includes multiple communication ports (not depicted in FIG. 1) for communicating with parties. Processor 102 executes a series of computer-readable instructions for operating fair witness 100. Authenticator 104 serves to verify identities of connected parties. Illustratively, authenticator 104 validates parties by authenticating digital signatures of certificates provided by parties making use of fair witness 100.

Database 106 comprises a data storage area for storing details of transactions witnessed by fair witness 100 and a means for indexing such details. In one embodiment of the invention, transaction details are stored in encrypted format in database 106. Illustratively, the details are encrypted with a symmetric key, such as provided in the Digital Encryption Standard (DES). Alternatively, however a Public Key Encryption (PKE) method is utilized in which a transaction's details are illustratively encrypted with a private key of fair witness 100 and can only be decrypted with the corresponding public key, copies of which are given to all parties to the transaction.

Illustratively, client 120 comprises a web browser or other interface for accessing server 140, while server 140 is an Internet server (e.g., a web server) and fair witness 100 is an Internet server or application. Thus, in the illustrated embodiment, communication link 130 is the Internet and communication link 110 is an Internet connection (e.g., a dedicated or dial-up link through an Internet service provider). Although fair witness 100, client 120 and server 140 are distinct entities in the present embodiment, in alternative embodiments any or all of them are coterminous (e.g., co-located in a single computer system and/or network). For example, in one embodiment of the invention, fair witness 100 constitutes a network server on which the user maintains an account for participating in electronic commerce and operates on the same computer as server 140. The scope of the invention is not limited to a particular type or form of communication links for interconnecting fair witness 100, client 120 and server 140.

As stated above, in the presently described embodiment fair witness 100 receives and forwards all communications directed between 120 and server 140. Fair witness 100 is thus able to intercept and save communications reflecting all or a portion of the terms of the electronic transaction. Illustratively, fair witness 100 retains the key terms of the agreement (e.g., price, quantity, description, time frame for delivery or performance). If, for example, a particular protocol is implemented for the transaction, such as Open Trading Protocol (OTP) or a form of Electronic Data Interchange (EDI), fair witness 100 is configured to apply the protocol to identify and retain at least the key terms of the transaction. The terms may be reflected in one communication or in multiple communications. In particular, communications retained by fair witness 100 accurately reflect the parties' agreement to the terms. For example, fair witness 100 illustratively stores the order form submitted by client 120 (e.g., a web page describing the purchase, with entries made by the user) and a verification from server 140. Alternatively, fair witness 100 records all communications between the parties, from the start of the transaction to its end.

Because fair witness 100 retains the key terms of the parties' transaction, it can "recreate" the transaction in the event of a dispute between the user and the merchant. For example, the user may be billed at a higher rate than he or she agreed to, or may receive goods different from those expected. In such an event, the user requests fair witness 100 to reproduce the agreement or the relevant portion(s) thereof. Because of the trusted nature of fair witness 100 (discussed further below), including its reliability and security, the burden is upon the party disagreeing with the fair witness' records to disprove the recreated transaction.

One skilled in the art will recognize that use of a fair witness as provided by the present invention is particularly efficacious when client 120 is a "thin" client. Whereas "thick" clients tend to possess more robust resources and are thus capable of retaining the communications comprising the terms of an electronic transaction, a thin client generally lacks this capability. Implementation of a fair witness in a present embodiment of the invention therefore requires no additional software or programming on client 120. An applet may, alternatively, be employed by client 120 to inform fair witness 100 of the communications that the user would like to have preserved.

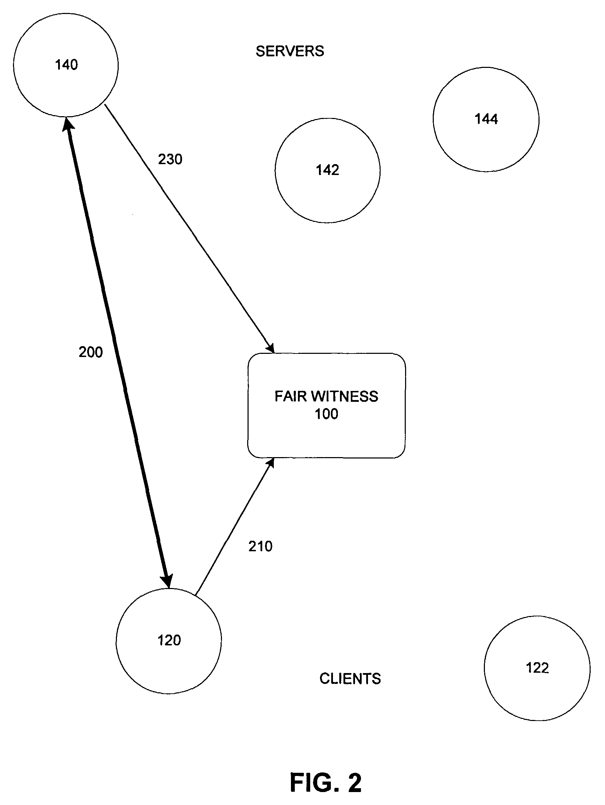

An alternative embodiment of the invention is depicted in FIG. 2. In this embodiment, fair witness 100 is not located in the path of all communications between the parties to the transaction (client 120 and server 140). Instead, communications exchanged between client 120 and server 140 traverse communication link 200. Thus, the parties reach agreement as to the terms of the transaction independently of fair witness 100. Communication link 200 illustratively comprises a dial-up link or a combination of other links. In one embodiment, communication link 200 includes a connection between client 120 and an Internet service provider (ISP) and a connection between the ISP and server 140.

In the embodiment depicted in FIG. 2, client 120 and server 140 independently transmit details of their transaction to fair witness 100. Thus, even though it does not receive the original communications comprising the transaction, the fair witness still receives the information that is necessary to later prove all or a part of the transaction. It will be recognized that this embodiment of the invention is also well suited to thin clients. Illustratively, client 120 in the presently described embodiment is a browser employing an applet that forwards the desired transaction details to fair witness 100.

Although FIG. 2 depicts both parties submitting details of the transaction to fair witness 100, in an alternative embodiment of the invention only one party, such as client 120, does so. In such an embodiment, server 140 may retain its own record of the transaction. In this embodiment, however, the trusted nature of fair witness 100 may result in a preference (e.g., by a court in a legal dispute) for the witness' version of the details of the transaction if they differ from the server's version.

In order to ensure that it is receiving information from the actual participants in the transaction, fair witness 100 illustratively authenticates server 140 when it establishes a connection via communication link 130 and authenticates client 120 when it connects via communication link 110. Secure Sockets Layer (SSL) authentication is used in a present embodiment, although other methods (e.g., digital certificates, fixed Internet Protocol (IP) addresses) are contemplated as well.

In the event that terms of the transaction are submitted by both client 120 and server 140, in one embodiment of the invention fair witness 100 compares the versions submitted by the parties. If both versions reflect the same details, then fair witness 100 illustratively stores only one version. If, however, the details differ, fair witness 100 is illustratively configured to store both versions for later reconciliation, which may or may not be necessary. Alternatively, fair witness 100 reports the discrepancy to the parties in the interest of forestalling a disagreement.

Unless all information passing between client 120 and sewer 140 is to be recorded, a method is required for identifying the communications (e.g., web pages) or transaction details that are to be sent to and recorded by the fair witness. As described above, a transaction protocol may be implemented by the parties, in which case client 120 and sewer 140 apply the protocol to identify important information to be recorded. In an alternative embodiment in which a protocol is not enforced, each web page the user wishes to have recorded in marked in some fashion (e.g., a check box is programmed into each page of the transaction). In another alternative embodiment, the merchant illustratively forwards to the fair witness all communications received from the client.

In yet a further alternative embodiment, sewer 140 offers client 120 one or more options concerning the information to be recorded by fair witness 100. The options may be relayed by the fair witness. After the client returns a choice, the corresponding information is automatically sent to the fair witness.

### Operation of a Fair Witness

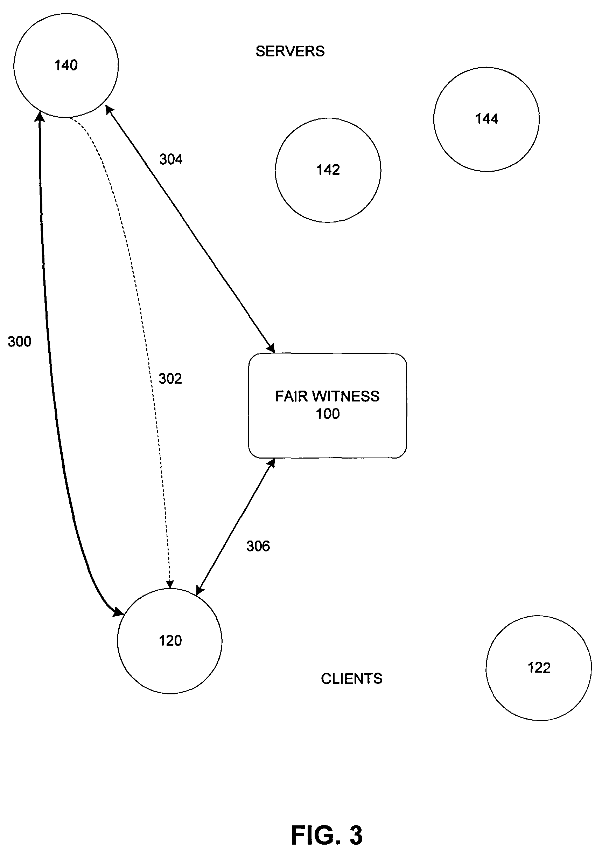

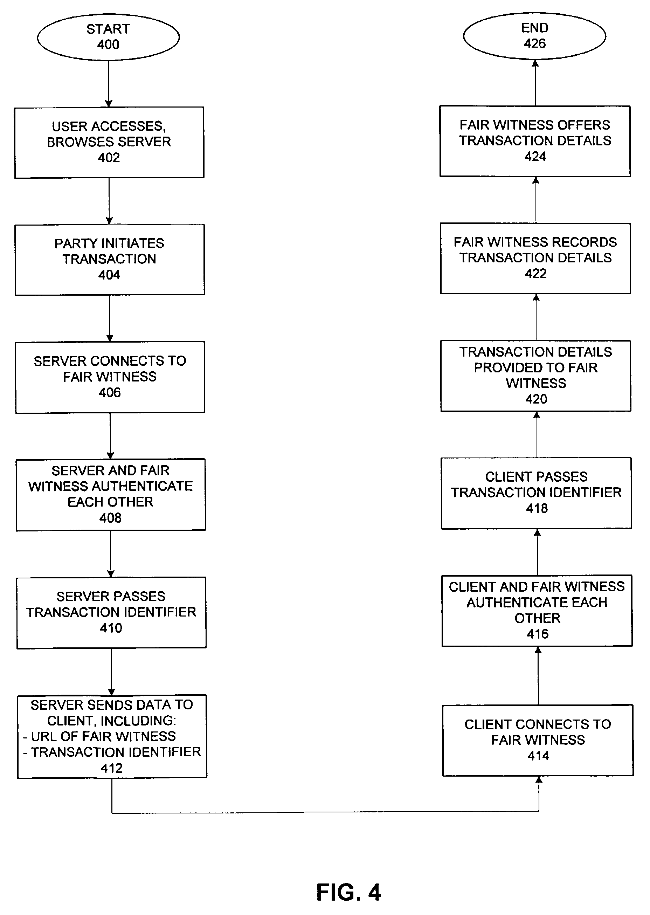

FIG. 3 depicts an illustrative method of implementing a fair witness to enable the preservation of key portions of an electronic transaction, in accordance with the embodiment of the invention presented in FIG. 2. A flow chart describing the method in greater detail is provided in FIG. 4 and is discussed further below. The method is illustratively applied in the context of the Internet and Internet-based commerce.

In an initial state, the user employs client 120 to browse web pages or other information on server 140. The user's browsing activity is conducted via communication link 300. Communication link 300 illustratively comprises an Internet service provider (ISP) that is coupled to both client 120 and server 140.

At some point, the user expresses an interest in purchasing an item. Server 140 then sends, via communication link 300 or another path, data stream 302. Data stream 302 includes information concerning fair witness 100, which is to witness the transaction. One purpose of the data stream is to identify the fair witness to the client so that the client will establish a connection to the fair witness. Illustratively, the information within data stream 302 includes a Uniform Resource Locator (URL) or other locator by which client 120 can access the fair witness, and an identifier (e.g., a code or alphanumeric sequence) with which to identify the transaction.

Server 140 establishes a secure connection with fair witness 100, via communication link 304, and informs the fair witness of the transaction identifier so that it can associate the proper parties conducting the transaction. Client 120 similarly establishes a secure connection with fair witness 100 via communication link 306 and also passes the transaction identifier to the fair witness. In a present embodiment of the invention, links 304 and 306 utilize the SSL security protocol. Implementation of the SSL protocol prevents modification of communications traversing links 304 and 306 (except, perhaps, by fair witness 100). In a present embodiment, fair witness 100 authenticates each party and each party authenticates the fair witness. Illustratively, the fair witness exchanges digital certificates with both parties. Alternatively, SSL authentication is employed or, where applicable, fixed IP addresses are exchanged and examined.

Now that trusted communication paths exist between the parties and the fair witness, the parties may pass all or selected portions of their transaction to the fair witness for safekeeping. In the illustrated method of operation, however, the primary path for negotiations and communications between client 120 and server 140 is link 300. Thus, only the information specifically sent from each party to the fair witness is preserved. Methods of determining what information is to be passed to the fair witness are described above. In one embodiment, however, information (e.g., web pages) that server 140 sends to client 120 is sent to the fair witness as well. In addition, client 120 forwards to the fair witness what it receives from server 140 or, alternatively, sends a message digest (discussed below) concerning what was received from server 140. The fair witness is thus able to synchronize and verify the accuracy of the transaction details provided by server 140.

Although fair witness 100 is depicted as isolated from client 120 and server 140, in an alternative embodiment of the invention the fair witness is co-located (e.g., on the same computer system or network) with either or both of client 120 and server 140.

FIG. 4 is a flow chart describing the above-mentioned process in greater detail. State 400 is a start state. In an exemplary embodiment of the invention, prior to or concurrent with start state 400 the parties select or otherwise agree upon a fair witness to monitor their transaction. In an alternative embodiment of the invention, the selection of fair witness 100 is made after the transaction begins. In state 402, a user connected to client 120 employs an interface to access and view information on server 140 via communication link 300. Client 120 therefore illustratively includes a browser such as Netscape Navigator or Microsoft Internet Explorer, or another interface designed to access server 140. Server 140 is illustratively employed by a merchant offering various goods and/or services for sale. Thus, in state 402 the user reviews the merchant's offerings.

In state 404 the user decides to purchase an item and signals accordingly. Illustratively, the user selects a "buy" option by manipulating the software executing on client 120 and/or server 140. The decision to make a purchase means that the parties must enter a secure, trusted mode of communication. In this trusted mode, fair witness 100 records or preserves one or more details of the transaction so that they can be recreated in the event of a dispute. This prevents either party from later repudiating the transaction.

In response to the user's purchase action, in state 406 server 140 connects to fair witness 100 via communication link 304, using the fair witness' URL or other locator. In the present embodiment the server party (i.e., the merchant) selects the fair witness. In an alternative embodiment the fair witness is chosen by the client party or is decided upon by agreement between the parties (e.g.. by exchanging lists comprising acceptable witnesses and agreeing upon one that is common to both lists). Because the fair witness is being relied upon to accurately record details of the transaction, communication link 304 is secured through use of the SSL protocol. A trusted path is thus established between server 140 and fair witness 100.

To ensure the identity of server 140 and fair witness 100, they authenticate themselves to each other in state 408, illustratively using SSL authentication to do so. In an alternative embodiment of the invention, the server and fair witness authenticate each other by exchanging digital certificates issued by a certificate authority. In another alternative embodiment, they simply verify IP addresses (if both have fixed IP addresses) or use Mondex cards or other identification cards. In yet a further alternative embodiment, server 140 authenticates fair witness 100 but the fair witness need not authenticate server 140. One skilled in the art will recognize that the primary goal of states 406 and 408 is to establish a secure path between server 140 and fair witness 100 and to prevent a third party from impersonating either of them. Various methods of accomplishing this goal are suitable, as long as a trusted communication link is established and the communicants are reasonably certain with whom they are communicating.

In state 410, server 140 sends the fair witness the transaction identifier that will be used to identify the client when it connects. In a present embodiment of the invention, the identifier was generated or chosen by server 140. The identifier is, unique to this transaction, at least within a certain time period or with a particular client. Illustratively, the transaction identifier consists of an alphanumeric code or sequence of digits.

In state 412 server 140 issues data stream 302 to client 120. A primary purpose of data stream 302 is to identify to the client the fair witness that will witness or monitor the transaction. Within data stream 302 is a URL identifying fair witness 100. The URL identifies where (e.g., on the Internet) the fair witness can be found. The fair witness may, alternatively, be identified in some other manner (e.g., fixed IP address or other unique locator). Data stream 302 also includes the transaction identifier. The transaction identifier is needed because fair witness 100 will be involved in separate connections to client 120 and server 140. Fair witness 100 therefore must be able to correctly identify and match the parties involved in each witnessed transaction. When client 120 and server 140 individually connect to fair witness 100, they will each provide the same transaction identifier. The transaction identifier illustratively comprises a flag attached to the URL sent by server 140. The identifier is alternatively sent in a separate transmission.

In state 414, client 120 connects to fair witness 100 via the locator (e.g., URL) provided by server 140. Client 120 connects to fair witness 100 across communication link 306, which is secured in a manner similar to link 304 (e.g., SSL) in order to provide a trusted link. Client 120 and fair witness 100 then authenticate themselves to each other in state 416, using the same or different mechanism as employed in state 410. Then, in state 418, client 120 transmits the transaction identifier that it received from server 140. Upon receipt of the identifier, fair witness 100 determines the other party or parties involved in the transaction, thus finding server 140. Illustratively, server 140 informs the fair witness of the number of parties involved in the transaction so that the fair witness can ensure that all parties are connected or otherwise represented.

Although client 120 and fair witness 100 are coupled in a secure, trusted manner in the illustrated embodiment, in an alternative embodiment a high level of trust is not required. For example, in an electronic transaction where the client submits payment during the transaction (e.g., via credit card, Digicash, Cybercash, etc.) and the fair witness is informed of the payment, there is little or no danger of dispute concerning the user's performance of his or her part of the transaction. Because only the merchant's performance is subject to dispute, the merchant thus has an incentive to provide a record of the essential details of the transaction (e.g., price, quantity, description of the item, delivery terms, warranty) to the fair witness. The client may also, of course, submit details of the transaction to the fair witness for safekeeping, but in the event of a dispute the burden will be on the merchant to prove its performance. The merchant's burden will be alleviated, partially or totally, depending upon the details provided by the merchant to the server and the authenticity of those details.

With reference to FIG. 4 once again, now that trusted connections exist between fair witness 100 and each of client 120 and server 140, in state 420 the parties submit details of the transaction to the fair witness. Either or both parties may, for example, submit the web pages exchanged between the parties. The communications comprising the transaction may occur before, during, and/or after the parties establish trusted connections with fair witness 100.

In one exemplary embodiment of the invention, a known transaction protocol is in effect for the transaction between client 120 and server 140 (e.g., open trading protocol). As part of this protocol, either or both of client 120 and server 140 are aware of the key portions of the transaction and automatically forward them to fair witness 100. When such a protocol is in use in the embodiment of the invention depicted in FIG. 1, fair witness 100 is cognizant of the protocol in effect and automatically records the relevant information (instead of recording or preserving all the information or data flowing between the client and the server).

In one alternative embodiment, all parties to a transaction submit to the fair witness a ('contract" or other document evidencing the transaction or their understandings of the transactional details. The contract is preferably cryptographically signed in order to prevent its alteration during transmission. Receiving substantively identical contracts from all parties would constitute agreement in this embodiment.

In another embodiment of the invention, instead of passing entire web pages, electronic documents, or other information to fair witness 100, either or both of the parties merely pass the witness message digests. Illustratively, such a message digest contains only a summary of the transaction details. In such an embodiment, one or both parties retain the original details. In the event of a dispute concerning the transaction, a new message digest is made from the original details and compared against the message digest(s) provided to the fair witness.

Alternatively, the message digest comprises the result of a hashing or checksum operation applied to the communication(s) comprising the transaction (or the key parts thereof). Thus, one skilled in the art will understand that the amount and level of detail of the information submitted to, and retained by, fair witness 100 can fall into a wide range. The fair witness may receive and record all information passing between the parties (e.g., in the embodiment depicted in FIG. 1), just the result of a hash function or checksum operation performed on the information, or some amount in between.

In state 422, information submitted by the parties is indexed and saved. Illustratively, everything received from the parties is time-stamped and indexed by such identifying characteristics as time, date, server(s), client(s), and transaction identifier. In state 424, fair witness 100 offers the recorded transaction details to one of the involved parties or a legal intermediary. Typically, the details will be used to settle a dispute concerning the terms or a party's responsibilities concerning the transaction. State 426 is an end state.

In the event of a later dispute between the parties to a transaction recorded by a fair witness, either or both parties may request the fair witness to reproduce the transaction or its key parts. For example, if a user receives a pair of swim fins from the merchant but claims to have ordered a pair of mountain boots, the user and/or the merchant will request the fair witness to prove what was ordered. Because of the trusted nature of the fair witness and the secure manner in which information was provided to the fair witness, the evidence offered by the fair witness will create a presumption that the transaction occurred as reported by the fair witness. In order to retrieve requested information, the fair witness simply requires some detail concerning the transaction (e.g., date, transaction identifier, server and/or client identities).

As stated above, the fair witness may only store a hash value or checksum that was provided by one of the parties. The party that provided the hash value or checksum is responsible for recording the full details of the transaction on which the hash or checksum operation was performed. In another embodiment in which a party saves full details and also provides them to the fair witness, the fair witness still stores only a checksum or hash value (that it computed) rather than the full details. Because the details are being retained by the party, the fair witness can conserve storage space in this manner.

In one embodiment, for example, the server merely provides a message digest to the fair witness that includes hash and/or checksum values regarding the communication(s) comprising a transaction. If a dispute later arises concerning the transaction, the server produces the details of the transaction and furnishes them to the fair witness as well as the client and/or legal authority investigating the incident. The fair witness then computes a hash value on the details, using the same function originally applied by the server, and compares it with the original value. As long as they are identical, the fair witness can certify that the details provided by the server are accurate. Alternatively, the server produces the second hash value and provides it to the fair witness which then makes the comparison.

In the preceding description, one method of entering a "trusted mode" of communication in order to conduct an electronic transaction in accordance with the embodiment of the invention depicted in FIG. 4 was presented. In an alternative embodiment, the parties migrate from a "browsing mode" to "trusted mode" in a different manner. In this alternative embodiment, a user still initiates a purchase, but is offered a choice of fair witnesses and/or server sites with which to conduct the transaction. Illustratively, the user selects from a list of URLs, with each URL corresponding to a secure connection with a fair witness, including the witness' network address. The URL further contains a flag or script containing the address of a server site that will represent the merchant in the transaction. Once the user connects to a fair witness via the selected URL, the fair witness securely connects to the specified server site. The server then sends information to the fair witness, such as authentication data, server identity, a transaction identifier for the transaction, another server page or site with which to continue the transaction, etc. Then the server and client conduct the transaction as described above, and pass details of the transaction to the fair witness for safekeeping.

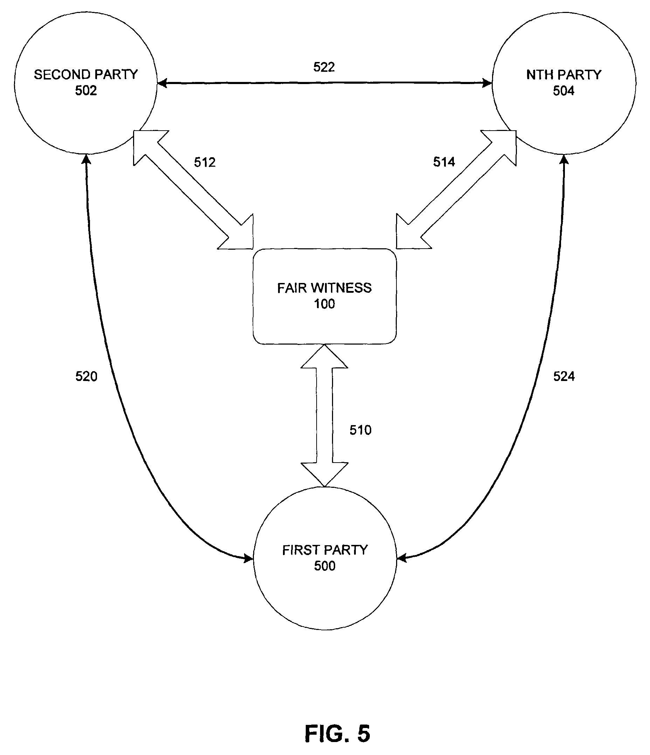

FIG. 5 depicts an embodiment of the invention in which more than two parties (e.g., a user connected to a client and a merchant connected to a server) are involved in a transaction. First party 500 and second party 502 are, illustratively a client and a server, respectively. Numerous other parties may also participate, with an Nth party being represented by the numeral 504. Nth party 504 may represent another server, perhaps a server on which the user maintains an account from which he or she conducts electronic transactions.

In an alternative embodiment, Nth party 504 is a "value acquirer." Value acquirers are often used in electronic transactions. In such a context, when a user wishes to make a purchase, he or she pays the sales price of the purchased item to a value acquirer (e.g., an electronic bank), perhaps via a credit card, Digicash or other means. The value acquirer then certifies to the merchant that the user has paid for the item and the merchant then delivers it to the user.

In the embodiment depicted in FIG. 5, fair witness 100 may be in the communication paths connecting the parties (represented by communication links 510, 512 and 514). Alternatively, the parties communicate amongst themselves via communication links 520, 522 and 524 and only submit particular transactional details or communications to fair witness 100 via communication links 510, 512 and 514.

The foregoing descriptions of embodiments of the invention have been presented for purposes of illustration and description only. They are not intended to be exhaustive or to limit the invention to the forms disclosed. Many modifications and variations will be apparent to practitioners skilled in the art. Accordingly, the above disclosure is not intended to limit the invention.

## Claims

1. A method of preserving details of, or witnessing, an electronic transaction between two or more parties (**120, 140, 500-504**) comprising the steps of:
a) establishing (**402**) a transaction communication link (**110, 130, 200: 300, 520**, **522, 524**) between the two or more parties,
b) identifying (**408**) a third party (**100**) adapted to store details of said transaction,
c) directing (**420**) whole or part of the details of the transaction to said third party,
d) recording (**422**) said whole or part of the details of the transaction in the third party with the consent of the two or more parties, and
e) offering said recorded communication for retrieval.

2. The method of claim 1, wherein the steps a) to d) and optionally step e) are computer-implemented.

3. The method of claim 1 or claim 2, wherein the step of establishing (**402**) the transaction communication link relays (**110, 130**) the transaction through the third party (**100**) so that the third party receives and forwards all communication between the said two or more parties (**120, 140**).

4. The method of any one of claims 1 to 3, wherein said step of recording (**422**) involves the interception and recording of all or a portion of the details of the electronic transaction.

5. The method of claim 4, wherein the portion is the portion relevant to the terms of the transaction.

6. The method of any one of claims 1 to 5, wherein the step of directing (**420**) whole or part of the details of the transaction to the third party (**100**) is independently completed (**210, 230**) by one of said two or more parties.

7. The method of any one of claims 1 to 6, wherein the step of directing (**420**) whole or part of the details of the transaction to the third party (**100**) is completed (**304, 306**) independently by all of said two or more parties.

8. The method of any one of claims 1 to 7, further comprising authenticating (**408, 416)** the identity of one or all of the parties involved in the transaction.

9. The method of claim 8, wherein said authenticating (**408, 416)** comprises receiving (**418**) in the third party a first transaction identifier from a first party (**120**) of said two or more parties, and receiving (**410**) in the third party a second transaction identifier from a second party (**140**) of said two or more parties.

10. The method of claim 9, further comprising matching in the third party (**100**) said first transaction identifier with said second transaction identifier.

11. The method of any one of claims 1 to 10, wherein the third party (**100**) compares the versions of the transaction detail supplied by each of the two or more parties.

12. The method of in claim 11, wherein the third party (**100**) on identifying different versions supplied by the two or more parties:
stores both versions, or
stores only one version and/or reports any discrepancy to the two or more parties.

13. The method of any one of claims 1 to 12, wherein any said recording (**422**) comprises indexing said transaction, and storing said transaction in a database (**106**).

14. The method of any one of claims 1 to 13, wherein at least one of said two or more parties (**120, 140, 500-504**) employs thin client technology.

15. The method of any one of claims 1 to 14, wherein said recording (**422**) said whole or part of the details of the transaction includes:
receiving the communication (**110, 130, 200: 300, 520, 522, 524**) between said two or more parties, said communication adhering to a protocol for conducting the transaction, and
identifying one or more terms of the transaction included in said communication in accordance with said protocol.

16. The method of claim 15, wherein said protocol facilitates the detection of any alteration in a communication traversing said communication link.

17. The method of any one of claims 1 to 16, wherein the step of recording (**422**) said whole or part of the details of the transaction comprises receiving (**410, 418**) a digest of the communication evidencing a portion of the transaction.

18. The method of claim 17, wherein said message digest comprises a hash value, said hash value being the result of a hash function performed on said communication, or wherein said message digest comprises a checksum, the checksum being the result of a checksum operation performed on the communication.

19. The method of any one of claims 1 to 18, wherein said transaction is indexed by one or more members of the group consisting of said first party(**120**), said second party (**140**), time of the transaction and date of the transaction.

20. The method of any one of claims 1 to 18, further comprising the steps of:
retrieving said whole or part of the transaction, and
proving said detail using said whole or part of the transaction.

21. The method of claim 20, wherein proving said detail comprises:
transmitting said communication from the third party to one of the first party and the second party.

22. The method of claim 20, wherein proving said detail comprises:
receiving in the third party an alleged copy of said communication from one of the first or the second party; and
verifying the accuracy of said alleged copy.

23. A computer program product stored on a computer usable medium, comprising;
computer readable program means for establishing (**402**) a transaction communication link between two or more parties (**120, 140; 500-504**),
computer readable program means for identifying (**408**) a third party (**100**) adapted to store details of an electronic transaction between the two or more parties,
computer readable program means for directing (**420**) whole or part of the details of the transaction to said third party,
computer readable program means for recording (**422**) said whole or part of the details of the transaction in the third party with consent of the two or more parties.

24. A computer data signal embodied in a carrier wave comprising;
a first code portion comprising code configured to establish (**402**) a transaction communication link (**110, 130; 200; 300; 500, 522, 524**) between two or more parties (**120, 140; 500-504**),
a second code portion comprising code configured to identify (**408**) a third party (**100**) adapted to store details of said transaction,
a third code portion comprising code configured to direct (**420**) whole or part of the transaction to said third party, and
a fourth code portion comprising code configured to record (**422**) said whole or part of the transaction in the third party (**100**).

25. An apparatus for preserving details of, or witnessing, an electronic transaction between two or more parties comprising;
a computer system (**100**), the computer system in communication with each of the two or more parties;
an authentication mechanism (**416**) within the computer system that authenticates at least one of the two or more parties;
an authentication mechanism (**416**) within the computer system that authenticates at least one of the two or more parties;
a receiving mechanism (**110, 130**) within the computer system that receives a communication concerning the transaction from said one of the two or more parties;
a storage mechanism (**106**) within the computer system that stores said communication; and
a retrieving mechanism (**424**) within the computer system that retrieves said communication.

26. The apparatus as claimed in claim 25 wherein the receiving mechanism comprises;
a first trusted communication link (**110**) coupling the computer system to a first transaction party (**120**);
a second trusted communication link (**130**) coupling the computer system to a second transaction party (**140**); and
wherein the communication concerns a detail of the transaction and said communication is stored for later retrieval in order to verify the detail.

27. The apparatus of claim 26, further comprising:
a relay (**102**) for relaying communications received on one of said first or second trusted communication link (**110, 130**) onto the other of said first or second trusted communication link;
wherein the computer system receives all communications exchanged between said first transaction party (**120**) and said second transaction party (**140**).

28. The apparatus of any one of claims 25 to 27, wherein said storage mechanism comprises a database (**106**).

29. The apparatus of any one of claims 25 to 28, wherein one of said first transaction party and said second transaction party (**140**) employs thin client technology.

30. A computer program encoding a set of instructions for preserving details of an electronic transaction between two or more parties (**120, 140; 500-504**) which when running on a computer is adapted to perform the method as claimed in any one of claims 1 to 22.
